# EUROPEAN PATENT APPLICATION

(11) **EP 1 202 189 A2**
(43) Date of publication of application: **02.05.2002**
(21) Application number: 01302658.8
(22) Date of filing: 22.03.2001
(51) Int. Cl.: G06F 17/30

(54) **Access inducing method and apparatus and storage medium**

(30) Priority: 23.10.2000 JP 2000323045
(71) Applicant: FUJITSU LIMITED, Kawasaki-shi, Kanagawa 211-8588 (JP)
(72) Inventor: Kumazawa, Takeshi, Kawasaki-shi, Kanagawa 211-8588 (JP); Saitoh, Noriko, c/o Fujitsu Limited, Kawasaki-shi, Kanagawa 211-8588 (JP)
(74) Representative: Fenlon, Christine Lesley

(57) **Abstract**

An access inducing apparatus (3) automatically makes a notification which includes information for inducing a user (10) to a homepage (4) when a predetermined condition is satisfied, with reference to a point in time when the user last made access to the homepage.

## Description

### BACKGROUND OF THE INVENTION

This application claims the benefit of a Japanese Patent Application No.2000-323045 filed October 23, 2000, in the Japanese Patent Office, the disclosure of which is hereby incorporated by reference.

### 1. Field of the Invention

The present invention generally relates to access inducing methods and apparatuses and storage media, and more particularly to an access inducing method and an access inducing apparatus for inducing re-access to homepage information which was accessed via a network such as the Internet, and to a computer-readable storage medium which stores a program for causing a computer to carry out such an access inducing operation.

Recently, due to the popular use of portable information terminals including personal computers and multi-function portable telephones, the use of the Internet is increasing considerably. A typical use of the Internet includes searching, inspecting and recording of desired homepage information by accessing a homepage.

### 2. Description of the Related Art

Conventionally, the homepage information is provided to the users by a homepage owner or manager (hereinafter referred to as a homepage provider) who opens the homepage at a specific location (URL). The user can access the homepage to access the desired homepage information. However, the homepage provider is passive and provides the homepage information only when requested from the user. Hence, the homepage provider cannot urge the user who has accessed the homepage before to access the homepage again. For this reason, in order to communicate with the users to advertise or announce update contents of the homepage, it is necessary to send direct mail to the users based on a predetermined register of names, and it is impossible to efficiently communicate with only the users who have accessed the homepage.

On the other hand, on the user side, it is not always the case that the user keeps a record the homepage the user has once accessed. In addition, when the user wishes to re-access the homepage the user has once accessed, the user may have forgotten the homepage address. Furthermore, even if a record of the accessed homepage information is kept by the user, the user still has to access the same homepage again if the homepage is updated, in order to obtain the most recent homepage information. But on the user side, it is impossible to know whether or not the homepage has been updated unless the user again accesses the homepage.

Some homepages require information for specifying the user to be input when accessing specific information of the homepage. In this case, the user can access the specific homepage information by inputting the users' ID or password. On the other hand, the homepage provider in this case can find out the user who accessed the specific homepage information, and thus, the homepage provider can advertise or announce update contents of the homepage by sending direct mail to the user. The user who receives the direct mail can find out the homepage address from the mail even if the user has forgotten the homepage address, can also find out whether or not the homepage information has been updated.

Conventionally, on the homepage provider side, there was a problem in that it is impossible to positively and efficiently advertise or announce update contents of the homepage to the users who have accessed the homepage in the past.

On the user side, there was a problem in that it is impossible to re-access the homepage the user has accessed in the past if the user forgets the homepage address. It is possible for the user to record the accessed homepage information, but it would require various troublesome operations to be made by the user to make the recording. In addition, even if the accessed homepage information is recorded, the user still has to access the same homepage again if the homepage is updated, in order to obtain the most recent homepage information. But there was a problem in that it is impossible for the user to know whether or not the homepage has been updated unless the user accesses the homepage again.

Therefore, it was conventionally impossible to induce the user to re-access the homepage information from the homepage provider side. On the other hand, on the user side, it was conventionally impossible to unconsciously obtain information, update contents and the like related to the homepage the user has accessed in the past. As a result, there was a problem in that the it is difficult to improve the services of providing the homepage information.

### SUMMARY OF THE INVENTION

Accordingly, it is a general object of the present invention to provide an access inducing method and apparatus and computer-readable storage medium, in which the problems described above are eliminated.

Another and more specific object of the present invention is to provide an access inducing method and apparatus and computer-readable storage medium which enable a homepage provider to induce a user to re-access homepage information, and enable the user to unconsciously obtain information, update contents and the like related to the homepage the user has accessed in the past, so that it is possible to improve the services of providing the homepage information.

Still another object of the present invention is to provide an access inducing method comprising a step automatically making, with respect to a user, a notification which includes information for inducing the user to a homepage when a predetermined condition is satisfied, with reference to a point in time when the user last made access to the homepage. According to the access inducing method of the present invention, it is possible to enable a homepage provider to induce a user to re-access homepage information, and enable the user to unconsciously obtain information, update contents and the like related to the homepage the user has accessed in the past, so that it is possible to improve the services of providing the homepage information.

A further object of the present invention is to provide an access inducing apparatus comprising first recording means for recording a point in time when a user last made access to a homepage, creating means for creating information for inducing the user to the homepage, and notifying means for automatically making a notification which includes said information with respect to the user when a predetermined condition is satisfied with reference to said point in time. According to the access inducing apparatus of the present invention, it is possible to enable a homepage provider to induce a user to re-access homepage information, and enable the user to unconsciously obtain information, update contents and the like related to the homepage the user has accessed in the past, so that it is possible to improve the services of providing the homepage information.

Another object of the present invention is to provide a computer-readable storage medium which stores a program for causing a computer to carry out a process of inducing a user to a homepage, where the program comprises a first recording procedure causing the computer to record a point in time when the user last made access to the homepage, a creating procedure causing the computer to create information for inducing the user to the homepage, and a notifying procedure causing the computer to automatically making a notification which includes said information with respect to the user when a predetermined condition is satisfied with reference to said point in time. According to the computer-readable storage medium of the present invention, it is possible to induce a user to re-access homepage information, and enable the user to unconsciously obtain information, update contents and the like related to the homepage the user has accessed in the past, so that it is possible to improve the services of providing the homepage information.

Other objects and further features of the present invention will be apparent from the following detailed description when read in conjunction with the accompanying drawings.

### BRIEF DESCRIPTION OF THE DRAWINGS

FIG. 1 is a diagram for explaining an operating principle of the present invention;
FIG. 2 is a system block diagram showing an embodiment of an access inducing apparatus according to the present invention;
FIG. 3 is a functional block diagram showing a structure of a server;
FIG. 4 is a flow chart for explaining a new user registration process;
FIG. 5 is a diagram for explaining user data managed by a server system;
FIG. 6 is a flow chart for explaining a notification process;
FIG. 7 is a flow chart for explaining a parameter setting process;
FIG. 8 is a diagram for explaining the parameter setting process;
FIG. 9 is a flow chart for explaining an update history management process; and
FIG. 10 is a diagram for explaining creation of notification contents.

### DESCRIPTION OF THE PREFERRED EMBODIMENTS

A description will be given of various embodiments of access inducing method and apparatus and storage medium, by referring to the drawings.

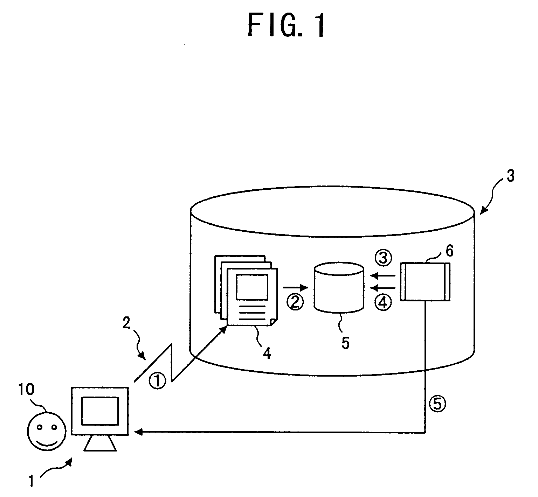

First, a description will be given of an operating principle of the present invention. FIG. 1 is a diagram for explaining the operating principle of the present invention. In FIG. 1, a user 10 can access a server system 3 from an information terminal 1 via a network 2 such as the Internet. The server system 3 is formed by a Web server having a known construction, and includes a homepage (contents) 4, a database 5 including an access record data group of users, and a user access state check program 6. A basic operation includes the following steps ① through ⑤.

Step ①: The user 10 accesses the server system 3 via the network 2, and accesses a desired homepage 4. Access to desired contents of this homepage 4 is enabled by inputting a user ID and a password of the user 10, for example. In addition, the user 10 is urged to input an e-mail address, a facsimile number and the like, and the user 10 inputs such user information (data).

Step ②: In the server system 3, information (access record) related to the access to the homepage 4 from the user 10 is held in the database 5 as the access record data group. For example, the user ID and the last access date and time are included in the access record. For example, the last access date and time is assumed to be a point in time when a top page of the accessed homepage 4 is last accessed. Further, the user ID, the e-mail address, the facsimile (FAX) number and the like are stored in the database 5 as user data.

Step ③: In the server system 3, the access state check program 6 refers to the access record data group within the database 5 to periodically check the access state to the homepage 4 from specific users, and determines whether or not a predetermined condition is satisfied. For example, the predetermined condition is a lapse of a predetermined number of days from the last access date and time. In other words, a check is made to determine whether or not {(present date and time)-(last access date and time)}≧(predetermined number of days). Moreover, it is possible to further include in the predetermined condition a number of times the homepage 4 is accessed (access frequency), a number of accessed pages of the homepage 4 and the like.

Step ④: In the server system 3, when the access state check program 6 detects that the predetermined condition is satisfied, the user IDs of the specific users included in the access record data group are used as keys to obtain the user data of the specific users from the database 5. For example, the user data which are obtained include the e-mail addresses and the facsimile numbers of the specific users.

Step ⑤: In the server system 3, the access state check program 6 notifies advertisements and update contents of the homepage 4 to the specific users, so as to induce re-access to the homepage information of the homepage 4 to the specific users. Accordingly, if the specific user is the user 10, the notification is made to the user 10 by a communication means such as e-mail address and facsimile number, based on the obtained user data. The contents of the notification are not limited to specific contents, and desirably include the homepage address, the update contents and the like of the homepage 4, and particularly, desirably include addresses of pages including the update contents.

Accordingly, it is possible to efficiently induce re-access to the homepage information of the homepage 4 with respect to the specific user such as the user 10, from the server system 3, that is, from the homepage provider side. In addition, from the specific user side such as the user 10, it is possible to unconsciously obtain information, update contents and the like related to the homepage 4 the user 10 has accessed in the past. As a result, it is possible to improve the services of providing the homepage information.

Next, a description will be given of an embodiment of an access inducing apparatus according to the present invention. This embodiment of the access inducing apparatus employs an embodiment of an access inducing method according to the present invention and an embodiment of a computer-readable storage medium according to the present invention.

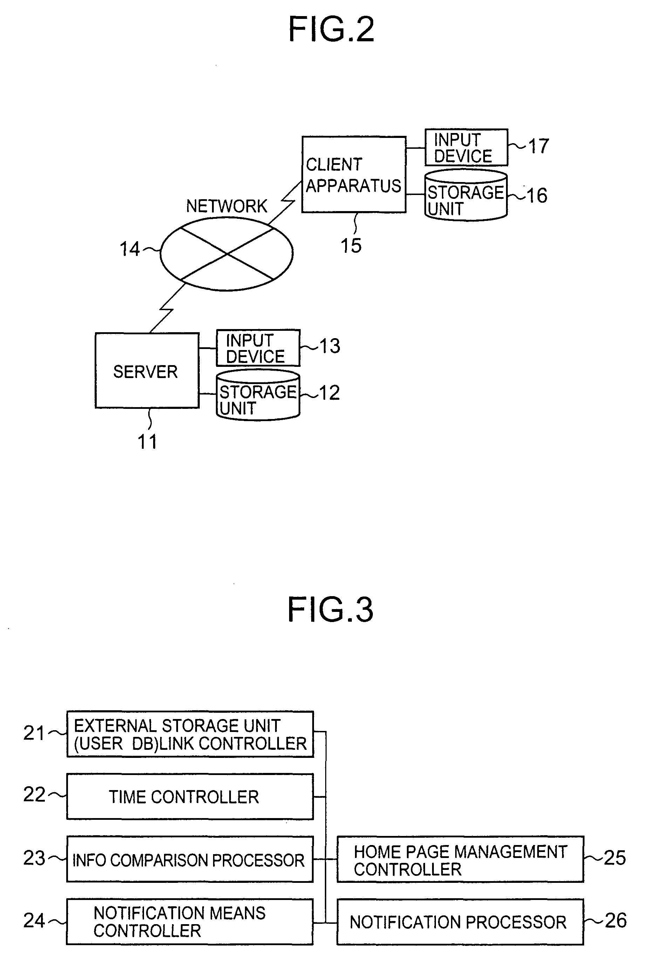

FIG. 2 is a system block diagram showing this embodiment of the access inducing apparatus according to the present invention. In FIG. 2, a server system generally includes a server 11, an external storage unit 12 and an input device 13. The server 11 is formed by a computer having a known hardware construction, and includes a display unit, a storage and the like. The storage may be formed by a magnetic disk, a magneto-optical disk, an optical disk, a semiconductor memory or the like. This embodiment of the computer-readable storage medium is formed by a recording medium which stores a program for causing the computer which forms the server 11 to carry out an access inducing operation according to this embodiment of the access inducing method, and this recording medium may form the storage described above. Of course, the program may be stored in the storage by being downloaded to the computer by a known communication means. The external storage unit 12 is formed by a storage means having a known hardware construction and capable of forming the database 5 shown in FIG. 1, and stores data, user data, access record data and the like related to the homepage 4. The input device 13 is formed by a keyboard, a mouse or the like.

The server 11 of the server system is capable of communicating with a client system via a network 14 such as the Internet. The client system generally includes a client apparatus 15, an external storage unit 16 and an input device 17. The client apparatus 16 is formed by a computer having a known hardware construction, and includes a display unit, a storage and the like. The hardware construction of the client system may basically be the same as that of the server system, and the external storage unit 16 may be omitted if the storage capacity of the storage within the client apparatus 15 is relatively large.

The client system may be formed by a personal computer, a telephone having an e-mail function, an information terminal or the like. Further, the client system may be a desk-top type or a portable type.

FIG. 3 is a functional block diagram showing a structure of the server 11. As shown in FIG. 3, the server 11 generally includes an external storage unit (database) link controller 21, a time controller 22, an information comparison processor 23, a notification means controller 24, a homepage management controller 25 and a notification controller 26. The external storage unit link controller 21 controls various processes which are carried out by accessing the external storage unit 12. As will be described later, the external storage unit link controller 21 controls processes such as a process related to registration of a new user, and a process related to authentication of a user who wishes to access the homepage information provided by the server 11. The time controller 22 is included in the access state check program 6 shown in FIG. 1, and manages and controls various time information. The time controller 22 may also manage a number of times the homepage 4 is accessed (access frequency), a number of accessed pages of the homepage 4, and the like. The information comparison processor 23 compares access record data of a specific user recorded in the external storage unit 12 and most recent homepage information, and judges update contents and the like of the homepage 4 after the last access by the specific user.

The notification means controller 24 determines a notification timing and a notification method for notifying advertisements and update contents of the homepage 4 to the specific user, based on the user data and the like obtained from the external storage unit 12 under the control of the time controller 22 and under the control of the external storage unit link controller 21, and controls the notification processor 26 accordingly. The notification processor 26 notifies to the specific user a processed result which is obtained by processing the data obtained from the external storage unit 12 by the external storage unit link controller 21 based on a judgement result of the information comparison processor 23, that is, the advertisements and update contents of the homepage 4, at the notification timing and by the notification method which are determined by the communication means controller 24. The homepage management controller 25 manages data which are related to the homepage 4 and are stored in the external storage unit 12.

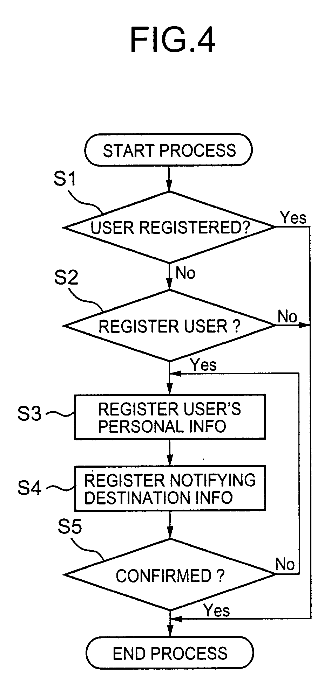

Next, a description will be given of a new user registration process, by referring to FIG. 4. FIG. 4 is a flow chart for explaining the new user registration process which is carried out by the server 11. For example, the new user registration process is carried out when a non-registered user accesses a page other than a top page of the homepage 4, or a specific page other than the top page of the homepage 4. A user authentication is carried out by the server 11 when enabling access to the page of the homepage 4, based on a user name (user ID), a password and the like which are input by the user. Hence, the access to the page of the homepage 4 becomes possible only after the user data requested by the server 11 are input and registered by the user.

In FIG. 4, a step S1 decides whether or not the user accessing the homepage 4 is a registered user, based on the inputs made by the user from the input device 17. The process ends if the decision result in the step S1 is YES. If the decision result in the step S1 is NO, a step S2 decides whether or not the user is to be newly registered, based on the inputs made by the user from the input device 17. The process ends if the decision result in the step S2 is NO. If the decision result in the step S2 is YES, a step S3 urges the user to register personal information, and registers the user's personal information based on the inputs made by the user from the input device 17. In addition, a step S4 urges the user to register notifying destination information, and registers the user's notifying destination information based on the inputs made by the user from the input device 17. The information registered in the steps S3 and S4 are stored in the external storage unit 12 as the user data. A step S5 decides whether or not the registered information is confirmed by the user, and the process returns to the step S3 if the decision result is NO, and the process ends if the decision result is YES.

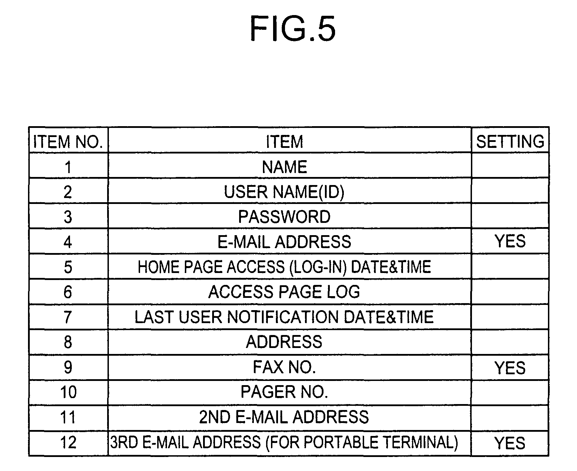

FIG. 5 is a diagram for explaining the user data managed by the server system. In FIG. 5, personal information of item numbers 1 to 4, that is, items "name", "user name (ID)", "password" and "e-mail address", are the personal information registered in the step S3 and must be registered. In addition, information of item numbers 5 and 6, that is, items "homepage access (log-in) date and time" and "access page log", are the access record data of the user who accesses the homepage and are recorded as history in a list structure. Information of an item number 7, that is, an item "last user notification date and time", is the information related to the last date and time when a notification was made to the user from the server 11. The information of the item numbers 5 to 7 is not registered from the user side, but is registered and updated automatically by the server 11 as user data after the user registration.

Information of item numbers 8 to 12, that is, items "address", "fax number", "pager number", "second e-mail address" and "third e-mail address (for portable terminal)", are the notifying destination information registered in the step S4. For example, it is sufficient to register at least one notifying destination information.

The personal information of the item number 4 and the notifying destination information of the item numbers 8 to 12 may be registered as the notification means which determines the notification timing and the notification method used when the server 11 makes the notification to the user. When registering the information as the notification means, a marking "YES" is registered in the corresponding setting. In the case shown in FIG. 5, the personal information of the item number 4 and the notifying destination information of the item numbers 9 and 12 are respectively set as the notification means.

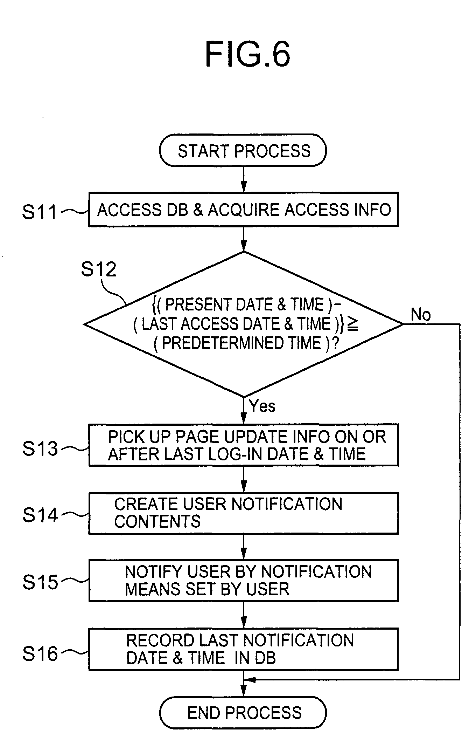

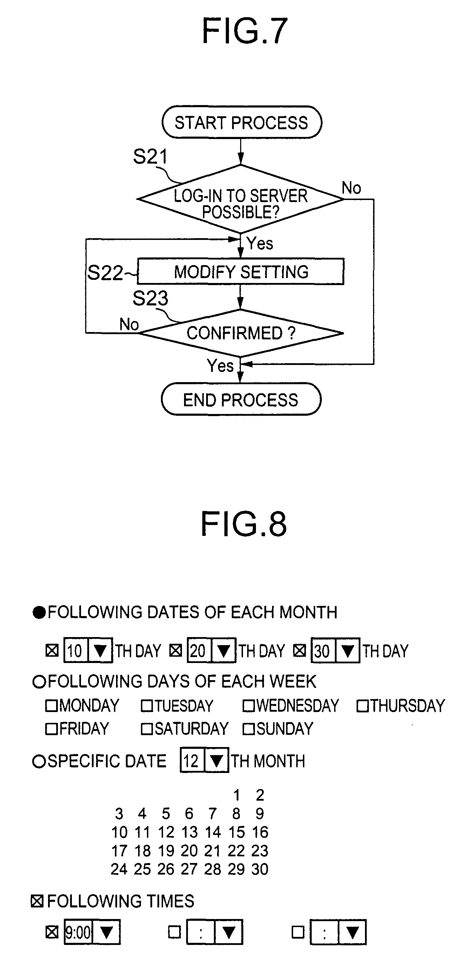

Next, a description will be given of a notification process which makes a notification from the server 11 to the user who has accessed the homepage 4 in the past, by referring to FIG. 6. FIG. 6 is a flow chart for explaining the notification process. The notification process shown in FIG. 6 is carried out by the server 11 according to a schedule which is set by the homepage provider or the server system manager. The setting of the schedule will be described later in conjunction with FIG. 7.

In FIG. 6, a step S11 accesses the database of the external storage unit 12, and acquires access information such as the access record data of the user. In this embodiment, the item "homepage access (log-in) date and time" of the item number 5 shown in FIG. 5, which indicates the last access date and time when the user last accessed the homepage 4, is acquired as the access information. A step S12 decides whether or not {(present date and time)-(last access date and time)}≧(predetermined time). The process ends if the decision result in the step S12 is NO. The predetermined time is set by the homepage provider or the server system manager, as will be described later in conjunction with FIG. 7.

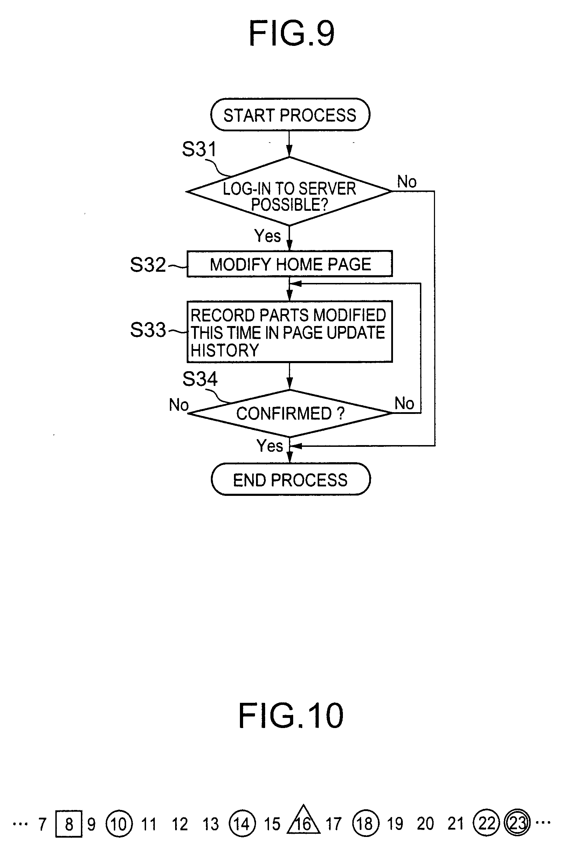

On the other hand, if the decision result in the step S12 is YES, a step S13 accesses the external storage unit 12, and acquires homepage update information by picking up from an update history page update information on or after the last log-in date and time, that is, page information not accessed by the user. The update history will be described later in conjunction with FIG. 9. A step S14 creates contents to be notified to the user (hereinafter referred to as notifying contents), based on the homepage update information. The creation of the notifying contents will be described later in conjunction with FIG. 10.

A step S15 accesses the database of the external storage unit 12, and notifies the notifying contents to the user by the notification means set by the user. In this embodiment, the personal information of the item number 4 and the notifying destination information of the item numbers 9 and 12 shown in FIG. 5 are used as the notification means, and thus, the notifying contents are notified to the computer, the facsimile apparatus and the portable terminal of the user. A step S16 accesses the database of the external storage unit 12, and updates the last notification date and time and records the updated last notification date in the database. The process ends after the step S16.

FIG. 7 is a flow chart for explaining a parameter setting process. Parameters set by the homepage provider or the server system manager include (i) a schedule for making the server 11 check the last access date and time of the user, that is, a timing with which the server 11 is to check the last access date and time, and (ii) a date and time condition for notifying the notification contents to the user, that is, a notification timing which indicates how long a no-access state from the user is to continue before the notification process is to be carried out.

In FIG. 7, a step S21 decides whether or not a log-in to the server 11 is possible, and the process ends if the decision result is NO. If the decision result in the step S21 is YES, a step S22 sets or modifies the parameters (i) and (ii). A step S23 confirms the setting of the parameters (i) and (ii), and decides whether or not the parameters (i) and (ii) are as set. The process returns to the step S22 if the decision result in the step S23 is NO. The process ends if the decision result in the step S23 is YES. When making the confirmation in the step S23, it is possible to employ a method which displays the set parameters (i) and (ii) on the display unit of the server 11 and requires confirmation by the homepage provider or the server system manager, for example.

FIG. 8 is a diagram for explaining the parameter setting process. FIG. 8 shows a setting screen which is displayed on the display unit of the server 11 when setting the parameters (i), that is, the schedule for making the server 11 check the last access date and time of the user. The schedule may be set by specifying every Xth day of each month, every Yth day of each week, every Xth day of Zth month of each year, and the like. In addition, it is also possible to specify the time. In the case shown in FIG. 8, the schedule is set to require the check on the 10th, 20th and 30th of each month at 9:00.

On the other hand, when setting the parameters (ii), that is, the date and time condition for notifying the notification contents to the user, the number of days is specified so that the contents notification is made to the user when {(present date and time)-(last access date and time)} becomes the specified number of days, for example. In this embodiment, the predetermined time which is used to judge whether or not {(present date and time)-(last access date and time)}≧ (predetermined time) is satisfied, is set to seven days.

FIG. 9 is a flow chart for explaining an update history management process which is carried out by the homepage provider or the server system manager. The update history management process shown in FIG. 9 is carried out by the server 11.

In FIG. 9, a step S31 decides whether or not a log-in to the server 11 is possible, and the process ends if the decision result is NO. If the decision result in the step S31 is YES, a step S32 modifies and updates the homepage 4. A step S33 records the modifications made this time by the step S32, to a page update history which is stored in the external storage unit 12. For example, the data recorded in the page update history include a modifier name (user ID), modified date and time, modified contents and the like. The modified contents need to be clearly recorded by the homepage provider or the server system manager, but the modifier name (user ID) and the modified date and time may be set automatically by the server 11.

A step S34 confirms the page update history, and decides whether or not the modifications are as made. The process returns to the step S33 if the decision result in the step S34 is NO. The process ends if the decision result in the step S34 is YES. When making the confirmation in the step S34, it is possible to employ a method which displays the page update history on the display unit of the server 11 and requires confirmation by the homepage provider or the server system manager, for example.

FIG. 10 is a diagram for explaining the creation of the notification contents. For the sake of convenience, it is assumed that the access times of the homepage 4 by users A and B are different, and that the notification contents to the users A and B are different due to the different access times. In FIG. 10, each numeral indicates a day of a certain month. In addition, a symbol ○ indicates an update date of the homepage 4, a symbol □ indicates a last access date of the user A to the homepage 4, a symbol Δ indicates a last access date of the user B to the homepage 4, and a symbol ⓞ indicates a last access check date of the server 11.

In the case shown in FIG. 10, by the final access check made by the server 11, it is found that the notification contents to the user A are the homepage update information corresponding to two days, namely, the 18th and the 22nd, and that the notification contents to the user B are the homepage update information corresponding to four days, namely, the 10th, the 14th, the 18th and the 22nd. Accordingly, the notification contents notified to the users A and B differ depending on the access state of the homepage 4 by the users A and B.

When carrying out the new user registration process, it is possible to set one or more keywords or the like related to one or more fields the user has interest in. In this case, when notifying the notification contents to the users, it is possible to make not only the amount of information different for each user depending on the access state, but also make the substance of the notification contents different for each user depending on the set keywords. As a result, it is possible to notify the notification contents to the users to suit each user's preferences. Accordingly, it is possible to prevent notification unnecessary contents to the users, and optimize the amount of information of the notification contents.

In the embodiment described above, the notification to the user is made from the homepage provider side, but the person making the notification is not limited to the homepage provider. For example, an notifying agency who made contracts with a plurality of homepage providers may receive information such as the access record data of the users from the homepage providers, and make the notifications to the users on behalf of the homepage providers.

Further, the present invention is not limited to these embodiments, but various variations and modifications may be made without departing from the scope of the present invention.

## Claims

1. An access inducing method
**characterized by**:
a step automatically making, with respect to a user, a notification which includes information for inducing the user to a homepage when a predetermined condition is satisfied, with reference to a point in time when the user last made access to the homepage.

2. The access inducing method as claimed in claim 1, **characterized in that** said information includes update information of the homepage on or after said point in time.

3. The access inducing method as claimed in claim 1 or 2, **characterized in that** the predetermined condition is formed by a lapse of a predetermined time from said point in time.

4. The access inducing method as claimed in any of claims 1 to 3, further **characterized by**:
a step urging the user to input user information,
said notification being made based on the user information.

5. The access inducing method as claimed in claim 4, **characterized in that** the user information includes notifying destination information, and the notification is made by a communication method depending on the notifying destination information.

6. An access inducing apparatus **characterized by**:
first recording means for recording a point in time when a user last made access to a homepage;
creating means for creating information for inducing the user to the homepage; and
notifying means for automatically making a notification which includes said information with respect to the user when a predetermined condition is satisfied with reference to said point in time.

7. The access inducing apparatus as claimed in claim 6, **characterized in that** said creating means creates information including update information of the homepage on or after said point in time.

8. The access inducing apparatus as claimed in claim 6 or 7, **characterized in that** said predetermined condition is formed by a lapse of a predetermined time from said point in time.

9. The access inducing apparatus as claimed in any of claims 6 to 8, further **characterized by**:
second recording means for recording user information input by the user,
said notifying means making the notification based on the user information.

10. The access inducing apparatus as claimed in claim 9, **characterized in that** the user information includes notifying destination information, and said notifying means makes the notification by a communication method depending on the notifying destination information.

11. A computer-readable storage medium which stores a program for causing a computer to carry out a process of inducing a user to a homepage, wherein said program is **characterized by**:
a first recording procedure causing the computer to record a point in time when the user last made access to the homepage;
a creating procedure causing the computer to create information for inducing the user to the homepage; and
a notifying procedure causing the computer to automatically making a notification which includes said information with respect to the user when a predetermined condition is satisfied with reference to said point in time.

12. The computer-readable storage medium as claimed in claim 11, **characterized in that** said creating procedure causes the computer to create information including update information of the homepage on or after said point in time.

13. The computer-readable storage medium as claimed in claim 11 or 12, **characterized in that** said predetermined condition is formed by a lapse of a predetermined time from said point in time.

14. The computer-readable storage medium as claimed in any of claims 11 to 13, further **characterized by**:
a second recording procedure causing the computer to record user information input by the user,
said notifying procedure causing the computer to make the notification based on the user information.

15. The computer-readable storage medium as claimed in claim 14, **characterized in that** the user information includes notifying destination information, and said notifying procedure causes the computer to make the notification by a communication method depending on the notifying destination information.
